(19) Europäisches Patentamt
European Patent Office
Office européen des brevets

(11) **EP 4 282 529 A1**

## (12) EUROPEAN PATENT APPLICATION
published in accordance with Art. 153(4) EPC

(43) Date of publication:
**29.11.2023 Bulletin 2023/48**

(21) Application number: **21921371.7**

(22) Date of filing: **27.12.2021**

(51) International Patent Classification (IPC):
*B01J 37/02* (2006.01)   *B01D 53/94* (2006.01)
*B01J 23/63* (2006.01)   *F01N 3/10* (2006.01)

(52) Cooperative Patent Classification (CPC):
**B01D 53/94; B01J 23/63; B01J 37/02; F01N 3/10**

(86) International application number:
**PCT/JP2021/048696**

(87) International publication number:
**WO 2022/158270 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2021 JP 2021007975**

(71) Applicant: **CATALER CORPORATION
Kakegawa-shi, Shizuoka 437-1492 (JP)**

(72) Inventors:
• **YAMASHITA, Yukiko
Kakegawa-shi, Shizuoka 437-1492 (JP)**
• **MATSUEDA, Satoshi
Kakegawa-shi, Shizuoka 437-1492 (JP)**
• **NAITO, Isao
Kakegawa-shi, Shizuoka 437-1492 (JP)**

(74) Representative: **Ricker, Mathias
Wallinger Ricker Schlotter Tostmann
Patent- und Rechtsanwälte Partnerschaft mbB
Zweibrückenstraße 5-7
80331 München (DE)**

## (54) PARTICLES FOR EXHAUST GAS PURIFICATION CATALYST

(57) Provided are particles for an exhaust gas purification catalyst, the particles comprising: inorganic oxide particles; and an inorganic coating layer covering the inorganic oxide particles. The particles for an exhaust gas purification catalyst have reduced cumulative pore volume in a pore diameter range of 0.1-20 $\mu$m compared to a cumulative pore volume in a pore diameter range of 0.1-20 $\mu$m of inorganic oxide particles before being coated with the inorganic coating layer. Accordingly, the particles for an exhaust gas purification catalyst have a higher thermal conductivity than the inorganic oxide particles before being coated with the inorganic coating layer.

**Description**

FIELD

The present invention relates to particles for an exhaust gas purification catalyst.

Exhaust gas from internal combustion engines such as automobile engines contain nitrogen oxides ($NO_x$), carbon monoxide (CO) and hydrocarbons (HC). Such exhaust gas is released into the air after oxidation and purification of the CO and HC and reduction of NOx using exhaust gas purifying catalysts.

Exhaust gas purifying catalysts are commonly in the form of exhaust gas purification catalyst devices having a honeycomb substrate and a catalyst coating layer formed on the substrate. A catalyst coating layer in an exhaust gas purification catalyst device generally includes precious metal catalyst particles and inorganic oxide particles, optionally with additional components, the precious metal catalyst particles being supported among at least some of the inorganic oxide particles.

An exhaust gas purifying catalyst generally exhibits high exhaust gas purification activity at high temperatures, with lower activity being exhibited at low temperatures. This is the cause of the problem of "cold start" when an automobile is started with the engine in a stopped state, which is associated with increased $NO_x$, CO and HC emissions in exhaust gas.

Recently there has been a shift toward adopting the international standard WLTC (Worldwide harmonized Light duty driving Test Cycle) for measurement of automobile fuel efficiency.

The conventional method that has been adopted in Japan for measurement of fuel efficiency is JC08 mode, measuring fuel efficiency with a distribution of 25% cold start, 75% hot start. However, the recently adopted WLTC mode measures fuel efficiency with 100% cold start.

In recent years, therefore, greater emphasis is being placed on the cold start range, increasing the importance of exhaust gas purification in the cold start range.

Efforts are thus being made in the industry to improve exhaust gas purification performance in the cold start range.

PTL 1, for example, proposes an exhaust gas purification catalyst having a wash coat layer divided into a front part on the exhaust gas inlet side and a rear part on the exhaust gas outlet side, with a lower coating amount on the front part to lower the heat capacity at the front part, and with palladium supported at high concentration. PTL 1 explains that when such a construction is employed, the wash coat layer on the front part tends to increase in temperature by the heat of exhaust gas, resulting in rapid temperature increase to the temperature at which palladium exhibits its catalytic activity, and consequently increasing activity in the low-temperature range.

PTL 2 describes an exhaust gas purification device for a vehicle, comprising a microwave generator and an exhaust gas purification catalyst, having a substrate and a coating layer coated onto the substrate, and the coating layer including a precious metal-supported catalyst and a microwave absorber. The exhaust gas purification device irradiates microwaves immediately after cold start to forcibly raise the temperature of the coating layer in order to obtain the desired exhaust gas purification catalyst activity.

[CITATION LIST]

[PATENT LITERATURE]

[PTL 1] Japanese Unexamined Patent Publication No. 2001-162166
[PTL 2] Japanese Unexamined Patent Publication No. 2019-048268

SUMMARY

[TECHNICAL PROBLEM]

It is an object of the present invention to provide an exhaust gas purification catalyst material that can increase exhaust gas purification performance in the cold start range.

[SOLUTION TO PROBLEM]

The present invention is as follows.
<Aspect 1> Particles for an exhaust gas purification catalyst, which include inorganic oxide particles and an inorganic covering layer covering the inorganic oxide particles, wherein the particles for an exhaust gas purification catalyst:

have a lower cumulative pore volume for the pore size range of 0.1 to 20 μm, compared to the cumulative pore volume for the pore size range of 0.1 to 20 μm of the inorganic oxide particles before covering with the inorganic covering layer,
whereby their thermal conductivity is higher than the inorganic oxide particles before covering with the inorganic covering layer.

<Aspect 2> Particles for an exhaust gas purification catalyst according to aspect 1, wherein the thermal conductivity of the particles for an exhaust gas purification catalyst is at least 1.10 times the thermal conductivity of the inorganic oxide particles.
<Aspect 3> Particles for an exhaust gas purification catalyst according to aspect 1 or 2, wherein the inorganic covering layer is a metal oxide layer.
<Aspect 4> Particles for an exhaust gas purification catalyst according to aspect 3, wherein the correlation coefficient between the inorganic element in the inorganic oxide particles and the metal element in the metal oxide in the inorganic covering layer is 0.70 or greater for the particles for an exhaust gas purification catalyst, as measured by FE-EPMA.
<Aspect 5> Particles for an exhaust gas purification catalyst according to aspect 3 or 4, wherein the metal element in the metal oxide includes cerium.
<Aspect 6> Particles for an exhaust gas purification catalyst according to aspect 5, wherein the metal element in the metal oxide further includes praseodymium.
<Aspect 7> Particles for an exhaust gas purification catalyst according to any one of aspects 3 to 6, wherein the crystallite diameter of the metal oxide composing the inorganic covering layer is 5 nm to 30 nm.
<Aspect 8> Particles for an exhaust gas purification catalyst according to any one of aspects 1 to 7, wherein the bulk density of the particles for an exhaust gas purification catalyst is 0.59 g/cm$^3$ or greater.
<Aspect 9> Particles for an exhaust gas purification catalyst according to any one of aspects 1 to 8, wherein:

the inorganic oxide particles are alumina particles, and
the inorganic covering layer is a layer including ceria at greater than 50 mass% with respect to the mass of the inorganic covering layer.

<Aspect 10> An exhaust gas purification catalyst that includes:
particles for an exhaust gas purification catalyst according to any one of aspects 1 to 9, and a precious metal catalyst, wherein the precious metal catalyst is supported on the particles for an exhaust gas purification catalyst.
<Aspect 11> An exhaust gas purification catalyst that includes:

particles for an exhaust gas purification catalyst according to any one of aspects 1 to 9,
supporting particles composed of inorganic oxide particles but different from the particles for an exhaust gas purification catalyst, and
a precious metal catalyst,

wherein the precious metal catalyst is supported on either or both the particles for an exhaust gas purification catalyst and the supporting particles.
<Aspect 12> An exhaust gas purification catalyst device having a substrate and a coating layer on the substrate, wherein the coating layer includes particles for an exhaust gas purification catalyst according to any one of aspects 1 to 8.
<Aspect 13> An exhaust gas purification catalyst device having a substrate and a coating layer on the substrate, wherein the coating layer includes an exhaust gas purification catalyst according to aspect 10 or 11.

[ADVANTAGEOUS EFFECTS OF INVENTION]

The present invention provides an exhaust gas purification catalyst material that can increase exhaust gas purification performance in the cold start range.

DESCRIPTION OF EMBODIMENTS

<Particles for exhaust gas purification catalyst>

The particles for an exhaust gas purification catalyst of the invention include inorganic oxide particles and an inorganic covering layer covering the inorganic oxide particles, wherein the particles for an exhaust gas purification catalyst:

have a lower cumulative pore volume for the pore size range of 0.1 to 20 $\mu$m, compared to the cumulative pore volume for the pore size range of 0.1 to 20 $\mu$m of the inorganic oxide particles before covering with the inorganic covering layer,
whereby their thermal conductivity is higher than the inorganic oxide particles before covering with the inorganic covering layer.

Modified technologies aimed at improving exhaust gas purification performance in the cold start range have existed in the prior art as well. Examples of such technologies include modifications to precious metal catalyst devices, modifications to the compositions of support particles supporting precious metal catalysts, utilizing adsorbents that adsorb and desorb exhaust gas components, and forcible heating of exhaust gas purification devices by heating wires.
However, the present invention is based on a different concept of improving exhaust gas purification performance in the cold start range by adding a component with increased thermal conductivity (particles for an exhaust gas purification catalyst) to the coating layer in order to raise the temperature-elevating rate of the coating layer.
In the particles for an exhaust gas purification catalyst of the invention, the surfaces preferably including the pore interiors of the porous inorganic oxide particles are covered with the inorganic covering layer, thus reducing the pore volume of pores with pore diameters in the range of 0.1 to 20 $\mu$m and increasing the denseness of the particles, and thereby increasing the thermal conductivity.
The particles for an exhaust gas purification catalyst of the invention may be used as a support for the precious metal catalyst, or they may be used as a component that is not supporting the precious metal catalyst.

<Inorganic oxide particles>

The inorganic oxide particles in the particles for an exhaust gas purification catalyst of the invention may be appropriately selected from among inorganic oxide particles commonly used in catalyst coating layers for exhaust gas purification catalyst devices. They may be of an oxide of one or more elements selected from among Al, Si, Ti, Zr and Ce, for example. When the inorganic residue is of two or more element oxides, it may be a mixture of multiple inorganic oxides, or a complex oxide including multiple elements, or it may be an inorganic oxide in a form that includes both.
Specifically, the inorganic oxide particles of the invention may be alumina, silica, titania, silica-alumina complex oxide, ceria, zirconia or ceria-zirconia complex oxide (CZ), for example. Such compounds with alkali metal elements, alkaline earth metal elements or rare earth elements other than Ce are also encompassed within the definition of the inorganic oxide particles of the invention.
The inorganic oxide particles of the invention may typically be alumina.
The inorganic oxide particles of the invention may also be porous particles.
The cumulative pore volume for the pore size range of 0.1 to 20 $\mu$m in the inorganic oxide particles may be 0.3 mL/g or greater, 0.4 mL/g or greater, 0.5 mL/g or greater, 0.6 mL/g or greater, 0.7 mL/g or greater or 0.8 mL/g or greater, for example, and 1.5 mL/g or lower, 1.2 mL/g or lower, 1.1 mL/g or lower, 1.0 mL/g or lower, 0.9 mL/g or lower, 0.8 mL/g or lower, 0.7 mL/g or lower, 0.6 mL/g or lower or 0.5 mL/g or lower, for example.
The cumulative pore volume for the pore size range of 0.1 to 20 $\mu$m is the value measured for the inorganic oxide particles by mercury intrusion using a mercury porosimeter.
The bulk density of the inorganic oxide particles of the invention may be 0.30 g/mL or higher, 0.35 g/mL or higher, 0.40 g/mL or higher, 0.45 g/mL or higher, 0.50 g/mL or higher, 0.55 g/mL or higher or 0.60 g/mL or higher, for example, and 1.20 g/mL or lower, 1.10 g/mL or lower, 1.00 g/mL or lower, 0.95 g/mL or lower, 0.90 g/mL or lower, 0.85 g/mL or lower or 0.80 g/mL or lower, for example.
The bulk density is the value of the mass of the inorganic oxide particles divided by the apparent volume (the volume which includes the pore volume).
The particles for an exhaust gas purification catalyst of the invention have a higher coefficient of thermal conductivity than the original inorganic oxide particles, since the inorganic oxide particles are covered by the inorganic covering layer. The thermal conductivity of the inorganic oxide particles may therefore be any arbitrary value. The thermal conductivity of the inorganic oxide particles may be 0.075 W/(m·K) to 0.125 W/(m·K), for example, as the value measured at room temperature (24 $\pm$2°C).

The "thermal conductivity" referred to herein is the value measured by the hot disk method. The thermal conductivity is measured by the method specifically described in the Examples.

<Inorganic covering layer>

The inorganic covering layer in the particles for an exhaust gas purification catalyst of the invention has a function of covering the surfaces of the porous inorganic oxide particles, preferably including the pore interiors, with the inorganic covering layer, thus reducing the pore volume of pores with pore diameters in the range of 0.1 to 20 $\mu$m and increasing the denseness of the particles, and thereby increasing the thermal conductivity.

The inorganic covering layer may also be a metal oxide layer. From the viewpoint of further increasing the thermal conductivity of the particles for an exhaust gas purification catalyst, the metal element in the metal oxide may include a rare earth metal element. Rare earth elements have high mass numbers and a large number of free electrons. Including a rare earth metal oxide in the inorganic covering layer is therefore thought to increase heat transfer by free movement of electrons, thus increasing the overall thermal conductivity of the particles for an exhaust gas purification catalyst. However, the present invention is not to be constrained by this theory.

The inorganic covering layer in the particles for an exhaust gas purification catalyst of the invention may be a layer of a rare earth metal element oxide, or a layer of a complex oxide of a rare earth metal element with one or more elements selected from among Al, Si, Ti and Zr.

From the viewpoint of the mass number and free electrons of the element, the metal element in the metal oxide composing the inorganic covering layer may include cerium. Specifically, the inorganic covering layer in the particles for an exhaust gas purification catalyst of the invention may be a layer that includes ceria. Cerium may have more or fewer free electrons depending on difference in valency, and is therefore thought to be particularly advantageous from the viewpoint of heat transfer by free movement of electrons.

The ceria content in the inorganic covering layer may be greater than 50 mass%, 60 mass% or greater, 70 mass% or greater, 75 mass% or greater, 80 mass% or greater, 85 mass% or greater, 90 mass% or greater or 95 mass%, or even 100 mass%, with respect to the mass of the inorganic covering layer. From the viewpoint of obtaining an inorganic oxide layer that exhibits the advantages of including a metal element oxide other than ceria, and particularly praseodymium oxide as explained below, the ceria content in the inorganic covering layer may be 99 mass% or lower, 98 mass% or lower, 96 mass% or lower, 94 mass% or lower, 92 mass% or lower or 90 mass% or lower, with respect to the mass of the inorganic covering layer.

Similarly, from the viewpoint of the mass number and free electrons of the element, the metal element in the metal oxide composing the inorganic covering layer may include praseodymium in addition to cerium. Specifically, the inorganic covering layer in the particles for an exhaust gas purification catalyst of the invention may be a layer that includes praseodymium oxide in addition to ceria. The praseodymium oxide content in the inorganic covering layer may be 1 mass% or greater, 3 mass% or greater, 5 mass% or greater, 10 mass% or greater, 15 mass% or greater, 20 mass% or greater or 30 mass% or greater, and 80 mass% or lower, 60 mass% or lower, 50 mass% or lower, 40 mass% or lower, 30 mass% or lower, 20 mass% or lower, 18 mass% or lower, 15 mass% or lower, 12 mass% or lower or 10 mass% or lower, with respect to the mass of the inorganic covering layer.

In the particles for an exhaust gas purification catalyst of the invention, typically the inorganic oxide particles will be alumina particles and the inorganic covering layer will be a layer including greater than 50 mass% of ceria with respect to the mass of the inorganic covering layer, and in particular the inorganic covering layer may be composed of ceria.

The inorganic covering layer of the particles for an exhaust gas purification catalyst of the invention covers the surfaces of the inorganic oxide particles, preferably including the pore interiors. The inorganic covering layer may therefore be composed of crystallites small enough to infiltrate into the pores of the inorganic oxide particles.

In this case the crystallite diameter of the metal oxide composing the inorganic covering layer may be 5.0 nm or larger, 5.5 nm or larger, 6.0 nm or larger or 6.5 nm or larger, for example, and 30 nm or smaller, 25 nm or smaller, 20 nm or smaller, 15 nm or smaller, 12 nm or smaller, 10 nm or smaller, 9 nm or smaller or 8 nm or smaller, for example.

The crystallite diameter of the metal oxide is the value determined by XRD measurement, and specifically by the method described in the Examples below.

A higher abundance ratio is preferred for the inorganic covering layer in the particles for an exhaust gas purification catalyst of the invention, from the viewpoint of effectively covering the surfaces of the inorganic oxide particles, preferably including the pore interiors, to increase the thermal conductivity of the obtained particles for an exhaust gas purification catalyst. On the other hand it is also preferably lower from the viewpoint of maintaining a high area-to-weight ratio without occluding the pores of the inorganic oxide particles.

In consideration of these viewpoints, the abundance ratio of the inorganic covering layer in the particles for an exhaust gas purification catalyst of the invention may be 1 mass% or greater, 3% or greater, 5% or greater, 8% or greater or 10% or greater, for example, and 50 mass% or lower, 40 mass% or lower, 30 mass% or lower, 25 mass% or lower, 20 mass% or lower, 15 mass% or lower or 10 mass% or lower, for example, as the proportion of the mass of the inorganic covering layer in the total mass of the particles for an exhaust gas purification catalyst.

<Particles for exhaust gas purification catalyst>

In the particles for an exhaust gas purification catalyst of the invention, the cumulative pore volume for the pore size range of 0.1 to 20 $\mu$m is lower compared to the cumulative pore volume for the pore size range of 0.1 to 20 $\mu$m in the inorganic oxide particles before covering with the inorganic covering layer. The bulk density and thermal conductivity of the particles for an exhaust gas purification catalyst are also each greater than the bulk density and thermal conductivity of the inorganic oxide particles before covering with the inorganic covering layer.

The cumulative pore volume for the pore size range of 0.1 to 20 $\mu$m of the particles for an exhaust gas purification catalyst of the invention may be 99% or lower, 98% or lower, 95% or lower, 93% or lower, 90% or lower or 85% or lower, for example, compared to the cumulative pore volume for the pore size range of 0.1 to 20 $\mu$m of the inorganic oxide particles before covering with the inorganic covering layer. From the viewpoint of maintaining a high area-to-weight ratio of the obtained particles for an exhaust gas purification catalyst, however, the cumulative pore volume for the pore size range of 0.1 to 20 $\mu$m of the particles for an exhaust gas purification catalyst may be 65% or greater, 70% or greater, 75% or greater, 80% or greater, 85% or greater or 90% or greater, for example, compared to the cumulative pore volume for the pore size range of 0.1 to 20 $\mu$m of the inorganic oxide particles before covering with the inorganic covering layer.

The cumulative pore volume for the pore size range of 0.1 to 20 $\mu$m of the particles for an exhaust gas purification catalyst of the invention will typically be 0.2 mL/g or greater, 0.3 mL/g or greater, 0.4 mL/g or greater, 0.5 mL/g or greater, 0.6 mL/g or greater or 0.7 mL/g or greater, for example, and 1.2 mL/g or lower, 1.1 mL/g or lower, 1.0 mL/g or lower, 0.9 mL/g or lower, 0.8 mL/g or lower, 0.7 mL/g or lower, 0.6 mL/g or lower, 0.5 mL/g or lower or 0.45 mL/g or lower, for example.

The cumulative pore volume for the pore size range of 0.1 to 20 $\mu$m is the value measured for the particles for an exhaust gas purification catalyst by mercury intrusion using a mercury porosimeter.

The bulk density of the particles for an exhaust gas purification catalyst of the invention may be 101% or greater, 105% or greater, 110% or greater, 115% or greater or 120% or greater, for example, and 150% or lower, 140% or lower, 130% or lower, 125% or lower, 120% or lower, 115% or lower or 110% or lower, for example, compared to the bulk density of the inorganic oxide particles before covering with the inorganic covering layer.

The bulk density of the particles for an exhaust gas purification catalyst may be 0.35 g/mL or greater, 0.40 g/mL or greater, 0.45 g/mL or greater, 0.50 g/mL or greater, 0.55 g/mL or greater, 0.59 g/mL or greater, 0.60 g/mL or greater or 0.70 g/mL or greater, for example, and 1.25 g/L or lower, 1.20 g/mL or lower, 1.10 g/mL or lower, 1.00 g/mL or lower, 0.95 g/mL or lower, 0.90 g/mL or lower or 0.85 g/mL or lower, for example.

The bulk density is the value of the mass of the particles for an exhaust gas purification catalyst divided by the apparent volume (the volume which includes the pore volume).

The thermal conductivity of the particles for an exhaust gas purification catalyst of the invention may be 1.05 times or greater, 1.10 times or greater, 1.15 times or greater, 1.20 times or greater, 1.25 times or greater or 1.30 times or greater, for example, compared to the thermal conductivity of the inorganic oxide particles before covering with the inorganic covering layer.

The thermal conductivity of the particles for an exhaust gas purification catalyst does not increase in an unlimited manner as the proportion of the inorganic covering layer increases, but reaches a maximum limit. The thermal conductivity of the particles for an exhaust gas purification catalyst of the invention may be 1.80 times or less, 1.50 times or less, 1.40 times or less, 1.30 times or less or 1.20 times or less, for example, compared to the thermal conductivity of the inorganic oxide particles before covering with the inorganic covering layer.

The particles for an exhaust gas purification catalyst of the invention have a higher coefficient of thermal conductivity than the original inorganic oxide particles, since the inorganic oxide particles are covered by the inorganic covering layer. Therefore, the thermal conductivity of the particles for an exhaust gas purification catalyst depends on and is a larger value than the thermal conductivity of the inorganic oxide particles among the particles for an exhaust gas purification catalyst. The thermal conductivity of the particles for an exhaust gas purification catalyst, as the value measured at room temperature (24 $\pm$2°C), may be 0.090 W/(m·K) or higher, 0.095 W/(m·K) or higher, 1.000 W/(m·K) or higher, 1.100 W/(m·K) or higher or 1.200 W/(m·K) or higher, for example, and 0.180 W/(m·K) or lower, 0.160 W/(m·K) or lower, 0.140 W/(m·K) or lower, 0.130 W/(m·K) or lower, 0.125 W/(m·K) or lower or 0.120 W/(m·K) or lower, for example.

As mentioned above, the "thermal conductivity" referred to herein is the value measured by the hot disk method. The thermal conductivity is measured by the method specifically described in the Examples.

It is thought that the inorganic oxide particles covered by the inorganic covering layer in the particles for an exhaust gas purification catalyst of the invention have a higher coefficient of thermal conductivity than the original inorganic oxide particles because the cumulative pore volume for the pore size range of 0.1 to 20 $\mu$m of the inorganic oxide particles is reduced by covering with the inorganic covering layer, thereby increasing the denseness of the particles. The inorganic covering layer may therefore cover the surfaces of the inorganic oxide particles including their pore interiors.

Covering of the surfaces of the pore interiors of the inorganic oxide particles by the inorganic covering layer can be confirmed by a high correlation coefficient between the locations of inorganic element in the inorganic oxide particles and the locations of metal elements in the metal oxide within the inorganic covering layer. When the inorganic covering layer covers only the outer surfaces of the inorganic oxide particles, the correlation coefficient will be a low value.

From this viewpoint, the correlation coefficient between the inorganic element in the inorganic oxide particles and the metal element in the metal oxide within the inorganic covering layer may be 0.70 or greater, 0.75 or greater, 0.80 or greater, 0.85 or greater or 0.90 or greater, as measured for the particles for an exhaust gas purification catalyst of the invention by FE-EPMA. However, the correlation coefficient may be 0.99 or lower, 0.98 or lower, 0.97 or lower, 0.95 or lower, 0.92 or lower or 0.90 or lower in order to exhibit the expected effect of the invention.

The correlation coefficient between the inorganic element in the inorganic oxide particles and the metal element in the metal oxide within the inorganic covering layer, according to FE-EPMA, may be determined by the method described specifically in the Examples below.

<Method for producing particles for exhaust gas purification catalyst>

The particles for an exhaust gas purification catalyst of the invention described above can be produced by any method.

As an example, however, the particles for an exhaust gas purification catalyst of the invention can be produced by spraying a solution comprising the desired metal oxide precursor for the inorganic covering layer onto the inorganic oxide particles, and then firing.

The metal oxide precursor may be a strong acid salt of a metal, such as a metal hydrochloride, hydrobromide, nitrate or sulfate, for example.

The solvent of the solution comprising the metal oxide precursor may be a liquid mixture that is able to dissolve the metal oxide precursor, and will typically be water.

After spraying the metal oxide precursor solution, it may be dried if necessary prior to firing. The drying may be carried out at a temperature of 80°C to 300°C, for example, for a period of 0.5 hour to 48 hours, for example.

The firing may be carried out at a temperature of 400°C to 1,000°C, for example, for a period of 0.5 hour to 48 hours, for example. The firing may be carried out in an oxidizing atmosphere, but will typically be carried out in air.

If necessary, the product may then be pulverized and sorted to obtain particles for an exhaust gas purification catalyst having the desired size.

<Exhaust gas purification catalyst>

According to another aspect, the invention provides an exhaust gas purification catalyst (first exhaust gas purification catalyst) that includes:

> particles for an exhaust gas purification catalyst of the invention as described above, and
> a precious metal catalyst,

wherein the precious metal catalyst is supported on the particles for an exhaust gas purification catalyst.

The precious metal catalyst for the first exhaust gas purification catalyst may be one or more types of precious metals selected from among platinum group elements, and for example, it may be 1, 2 or 3 types from among Pt, Pd and Rh.

The first exhaust gas purification catalyst can be produced, for example, by dipping particles for an exhaust gas purification catalyst of the invention in a solution comprising the precious metal precursor and firing the solution.

The precious metal precursor may be a strong acid salt of any desired precious metal, or a complex compound of the same, such as a precious metal hydrochloride, hydrobromide, nitrate, sulfate or amine complex, for example.

The solvent of the solution comprising the precious metal precursor may be a liquid mixture that is able to dissolve the precious metal precursor, and will typically be water.

After the particles for an exhaust gas purification catalyst have been dipped in the precious metal precursor solution, they may be dried if necessary prior to firing.

Drying and firing for production of the first exhaust gas purification catalyst may be carried out by publicly known methods, or by such methods with appropriate modifications made by a person skilled in the art.

Another aspect of the invention provides an exhaust gas purification catalyst (second exhaust gas purification catalyst) that includes:

> particles for an exhaust gas purification catalyst of the invention as described above,
> supporting particles composed of inorganic oxide particles but different from the particles for an exhaust gas purification catalyst of the invention, and

a precious metal catalyst,

wherein the precious metal catalyst is supported on either or both the particles for an exhaust gas purification catalyst and the supporting particles.

The supporting particles for the second exhaust gas purification catalyst are composed of inorganic oxide particles other than the particles for an exhaust gas purification catalyst of the invention, and for example, they may be of oxides of one or more elements selected from among Al, Si, Ti, Zr and Ce, and specifically alumina, silica, titania, silica-alumina complex oxide, ceria, zirconia or ceria-zirconia complex oxide (CZ). Such compounds with alkali metal elements, alkaline earth metal elements or rare earth elements other than Ce are also encompassed within the definition of the supporting particles.

The precious metal catalyst of the second exhaust gas purification catalyst may be selected from among the aforementioned precious metals for the precious metal catalyst of the first exhaust gas purification catalyst.

The second exhaust gas purification catalyst can be produced, for example, by dipping particles for an exhaust gas purification catalyst of the invention and supporting particles in a solution comprising the precious metal precursor and firing the solution. After the particles have been dipped in the precious metal precursor solution, they may be dried if necessary prior to firing.

The solution comprising the precious metal precursor, and the drying and firing procedures, may be the same as explained for production of the first exhaust gas purification catalyst.

<Exhaust gas purification catalyst device>

According to yet another aspect, the invention provides an exhaust gas purification catalyst device (first exhaust gas purification catalyst device) having a substrate and a coating layer on the substrate,
wherein the coating layer includes the particles for an exhaust gas purification catalyst of the invention described above.

The substrate in the first exhaust gas purification catalyst device may be appropriately selected from among known substrates for publicly known exhaust gas purification catalyst devices. An example is a honeycomb substrate composed of an appropriate material such as cordierite or metal. A honeycomb substrate may be a straight flow type or a wall flow type.

The coating layer may be formed on the substrate.

The coating layer includes particles for an exhaust gas purification catalyst of the invention. The particles for an exhaust gas purification catalyst of the first exhaust gas purification catalyst device do not have a supported precious metal catalyst.

The coating layer may also include components other than the particles for an exhaust gas purification catalyst of the invention. Examples of such other components include precious metal catalysts, inorganic oxide particles other than the particles for an exhaust gas purification catalyst of the invention, and binders.

The precious metal catalyst for the first exhaust gas purification catalyst device may be one or more types of precious metals selected from among platinum group elements, and for example, it may be 1, 2 or 3 types from among Pt, Pd and Rh.

Inorganic oxide particles other than the particles for an exhaust gas purification catalyst of the invention in the first exhaust gas purification catalyst device may be of an oxide of one or more elements selected from among Al, Si, Ti, Zr and Ce, for example.

When the coating layer of the first exhaust gas purification catalyst device includes a precious metal catalyst, the coating layer also includes inorganic oxide particles other than the particles for an exhaust gas purification catalyst of the invention, the precious metal catalyst being supported on the inorganic oxide particles other than the particles for an exhaust gas purification catalyst of the invention.

The first exhaust gas purification catalyst device may have the coating layer including particles for an exhaust gas purification catalyst of the invention as a single layer, or it may have two or more coating layers. The first exhaust gas purification catalyst device may also have a coating layer in addition to the coating layer including particles for an exhaust gas purification catalyst of the invention. The coating layer other than the coating layer including particles for an exhaust gas purification catalyst of the invention may be any coating layer used in a publicly known exhaust gas purification catalyst device.

The first exhaust gas purification catalyst device may be one produced by any method.

For example, the first exhaust gas purification catalyst device can be produced by a method of coating the substrate with a coating solution containing the particles for an exhaust gas purification catalyst of the invention, and then firing it. The coating solution may also include optional components or their precursors in addition to the particles for an exhaust gas purification catalyst of the invention. After coating of the coating solution, it may be dried if necessary prior to firing.

Coating, drying and firing of the coating solution may be carried out by publicly known methods, or by such methods with appropriate modifications made by a person skilled in the art.

According to yet another aspect, the invention provides an exhaust gas purification catalyst device (second exhaust gas purification catalyst device) having a substrate and a coating layer on the substrate,
wherein the coating layer includes the exhaust gas purification catalyst of the invention described above.

The substrate of the second exhaust gas purification catalyst device may be the same substrate as for the first exhaust gas purification catalyst device.

The coating layer of the second exhaust gas purification catalyst device may be formed on the substrate.

The coating layer includes an exhaust gas purification catalyst of the invention. The exhaust gas purification catalyst may be of one or more types, selected from among the first exhaust gas purification catalyst and second exhaust gas purification catalyst.

The coating layer may also include components other than the exhaust gas purification catalyst of the invention. Examples of such other components include particles for an exhaust gas purification catalyst of the invention (not supporting a precious metal catalyst), precious metal catalysts, inorganic oxide particles other than the particles for an exhaust gas purification catalyst of the invention, and binders.

The precious metal catalyst of the second exhaust gas purification catalyst device and the inorganic oxide particles other than particles for an exhaust gas purification catalyst of the invention may each be the same as for the first exhaust gas purification catalyst device.

The second exhaust gas purification catalyst device may have the coating layer including an exhaust gas purification catalyst of the invention as a single layer, or it may have two or more coating layers. The second exhaust gas purification catalyst device may also have a coating layer in addition to the coating layer including the exhaust gas purification catalyst of the invention. The coating layer other than the coating layer including the exhaust gas purification catalyst of the invention may be, for example, one or more layers selected from among a coating layer including particles for an exhaust gas purification catalyst of the invention, and any coating layer used for publicly known exhaust gas purification catalyst devices.

The second exhaust gas purification catalyst device may be one produced by any method.

For example, the second exhaust gas purification catalyst device can be produced by a method of coating the substrate with a coating solution containing the exhaust gas purification catalyst of the invention, and then firing it. The coating solution may also include optional components or their precursors in addition to the exhaust gas purification catalyst of the invention. Coating of the coating solution may be followed by drying if necessary prior to firing.

Coating, drying and firing of the coating solution may be carried out by publicly known methods, or by such methods with appropriate modifications made by a person skilled in the art.

EXAMPLES

<Method of analyzing particles>

1. Bulk density

An approximately 20 g powder sample obtained for each of the Experimental Examples was weighed out and loaded into a graduated cylinder, and the volume was measured. The obtained sample weight (g) and volume (mL) were inputted into the following formula to calculate the bulk density.

$$\text{Bulk density (g/mL)} = \text{Sample weight (g)/sample volume (mL)}$$

2. Pore volume

The pore volumes of the powder samples obtained for each of the Experimental Examples were determined by examining the relationship between the mercury injection pressure and the mercury injection rate by the mercury intrusion method using a mercury porosimeter, converting the mercury injection pressure (P) to pore diameter by the Washburn formula represented by the following mathematical expression, and determining the cumulative pore volume of pores of 0.1 to 20 $\mu$m.

$$PD = -4\sigma\cos\theta$$

In the formula, P represents the mercury injection pressure, D represents the pore diameter, $\sigma$ represents the mercury surface tension and $\theta$ represents the contact angle between mercury and the sample. For this Example, cal-

culation was performed with $\sigma$ = 485 mN/m, $\theta$ = 130°.

3. Correlation coefficient between Al and metal element in inorganic covering layer

The correlation coefficient between Al and metal element in the inorganic covering layer ($\rho_{Al, Me}$) was examined for each of the inorganic covering layer-alumina composite particles obtained for the Experimental Examples. The correlation coefficient ($\rho_{Al, Me}$) between Al and the metal element in the inorganic covering layer was determined from the characteristic X-ray intensity for each element measured using a field emission electron beam microanalyzer (FE-EPMA). Specifically, first a 275 $\mu$m $\times$ 275 $\mu$m visual field observed at 300x magnification was divided into 256 lengthwise parts and 256 widthwise parts for a total of 65,536 regions, and the characteristic X-ray intensity of Al in each divided region, and the characteristic X-ray intensity of metal element in the inorganic covering layer, were both calculated. These values were used to calculate the covariance of the characteristic X-ray intensity of Al and the characteristic X-ray intensity of the metal element in the inorganic covering layer ($C_{Al,Me}$), the standard deviation of the characteristic X-ray intensity of Al ($\sigma_{Al}$), and the standard deviation of the characteristic X-ray intensity of Ce ($\sigma_{Me}$), by the following formulas, dividing the covariance ($C_{Al,Me}$) by the product of the standard deviations ($\sigma_{Al} \cdot \sigma_{Me}$) to calculate the correlation coefficient ($\rho_{Al, Me}$).

[Mathematical Formula 1]

$$\rho_{Al,Me} = \frac{C_{Al,Me}}{\sigma_{Al} \cdot \sigma_{Me}}$$

$$C_{Al,Me} = \frac{1}{n} \cdot \sum_{i=1}^{n} \left( I_{Al,i} - I_{Al,av} \right) \left( I_{Me,i} - I_{Me,av} \right)$$

$$\sigma_{Al} = \left[ \frac{1}{n} \cdot \sum_{i=1}^{n} \left( I_{Al,i} - I_{Al,av} \right)^2 \right]^{1/2}$$

$$\sigma_{Me} = \left[ \frac{1}{n} \cdot \sum_{i=1}^{n} \left( I_{Me,i} - I_{Me,av} \right)^2 \right]^{1/2}$$

In the formulas, $I_{Me,i}$ represents the characteristic X-ray intensity of the metal element in the inorganic covering layer for the $i^{th}$ divided region, $I_{Me,av}$ represents the average characteristic X-ray intensity of the metal element in the inorganic covering layer, $I_{Al,i}$ represents the characteristic X-ray intensity of Al in the $i^{th}$ divided region, $I_{Al,av}$ represents the average characteristic X-ray intensity of Al, and n represents the number of divided regions (65,536).

4. XRD measurement

The inorganic covering layer-alumina composite particles obtained for each of the Experimental Examples were analyzed by XRD to confirm that the metal element was present in the inorganic covering layer as an oxide, and the crystallite diameter of the oxide was examined. XRD measurement was carried out under the following conditions.

Detector: "RINT-TTR III" Horizontal high-intensity sample X-ray diffractometer by Rigaku Corp.
Tube: CuK$\alpha$
Output: 40 kV-250 mA
Measuring angle range (2$\theta$): 5 to 85°
Sampling interval: 0.02°

5. Thermal conductivity

The thermal conductivity of each powder sample obtained in the Experimental Examples was measured using a TPS 500S hot-disk Thermal Constants Analyzer by Hot Disk AB (Aktiebolag), Sweden, with a die size of 2.4 cmΦ, a sample filling height of 1.0 cm and a measuring pressure of 20 cmN, and at room temperature (24 $\pm$2°C).

<Comparative Example 1>

Alumina particles (alumina (1)) with a bulk density of 0.44 g/cm$^3$ and a cumulative pore size volume of 0.91 cm$^3$/g for pores of 0.1 to 20 $\mu$m were evaluated.

<Comparative Example 2>

Mixed particles obtained by dry blending 450 g of the same type of alumina (1) used in Comparative Example 1 and 50 g of ceria particles were evaluated.

<Example 1>

Ceria-alumina composite particles (particles for an exhaust gas purification catalyst) for Example 1 were obtained by spraying 299.4 g of a cerium nitrate solution having a Ce concentration of 16.7 mass% as CeO$_2$ (corresponding to 50 g of Ce as CeO$_2$) onto 450 g of the same type of alumina (1) as used in Comparative Example 1 and drying for 8 hours in air at 250°C, and then firing for 2 hours in air at 500°C. The ceria-alumina composite particles were evaluated.
Table 1 shows the evaluation results for the particles of Comparative Examples 1 and 2 and Example 1.

[Table 1]

Table 1

| | Starting alumina material | Inorganic covering layer | | | | | Particle properties | | | | |
|---|---|---|---|---|---|---|---|---|---|---|---|
| | | Metal elemental type | Amount added in terms of oxide wt% | Addition method | State | Crystallite diameter (nm) | Bulk density (g/mL) | Cumulative pore volume for 0.1 to 20 μm (mL/g) | Correlation coefficient (ρAl, Me) | Thermal conductivity (W/ (m.K)) |
| Comp. Example 1 | Alumina(1) | None | - | - | - | - | 0.44 | 0.91 | - | 0.086 |
| Comp. Example 2 | Alumina(1) | Cerium | 10 | Dry blending | Ceria | 7.92 | 0.45 | 0.71 | -0.19 | 0.088 |
| Example 1 | Alumina(1) | Cerium | 10 | Spraying → firing | Ceria | 7.00 | 0.48 | 0.74 | 0.92 | 0.099 |

<Comparative Example 3>

Alumina particles (alumina (2)) with a bulk density of 0.67 g/cm$^3$, and a cumulative pore size volume of 0.48 cm$^3$/g for pores of 0.1 to 20 μm were evaluated.

<Comparative Example 4>

Mixed particles obtained by dry blending 450 g of the same type of alumina (2) used in Comparative Example 3 and 50 g of ceria particles were evaluated.

<Comparative Example 5>

Ceria-alumina composite particles for Comparative Example 5 were obtained by dipping 450 g of the same type of alumina (2) as used in Comparative Example 3 in 1,111 g of a cerium nitrate solution with a Ce concentration of 4.5 mass% as CeO$_2$ (corresponding to 50 g of Ce as CeO$_2$), stirring for 1 hour at room temperature and drying for 8 hours in air at 250°C, and then firing for 2 hours in air at 500°C. The ceria-alumina composite particles were evaluated.

<Example 2>

Ceria-alumina composite particles (particles for an exhaust gas purification catalyst) for Example 2 were obtained by spraying 304.9 g of a cerium nitrate solution with a Ce concentration of 16.4 mass% as CeO$_2$ (50 g of Ce as CeO$_2$) onto 450 g of the same type of alumina (2) as used in Comparative Example 3, and drying for 8 hours in air at 250°C, and then firing for 2 hours in air at 500°C. The thermal conductivity of the ceria-alumina composite particles was evaluated.

<Example 3>

Ceria-alumina composite particles (particles for an exhaust gas purification catalyst) for Example 3 were obtained in the same manner as Example 2, except that the amount of alumina (2) was 400 g and the cerium nitrate solution was 380.23 g of a cerium nitrate solution with a Ce concentration of 26.3 mass% as CeO$_2$ (100 g of Ce as CeO$_2$). The ceria-alumina composite particles were evaluated.
Table 2 shows the evaluation results for the particles of Comparative Examples 3 to 5 and Examples 2 and 3.

[Table 2]

Table 2

| | Starting alumina material | Inorganic covering layer | | | | | Particle properties | | | |
|---|---|---|---|---|---|---|---|---|---|---|
| | | Metal elemental type | Amount added in terms of oxide wt% | Addition method | State | Crystallite diameter (nm) | Bulk density (g/mL) | Cumulative pore volume for 0.1 to 20 μm (mL/g) | Correlation coefficient (ρAl, Me) | Thermal conductivity (W/(m.K)) |
| Comp. Example 3 | Alumina(2) | None | - | - | - | - | 0.67 | 0.48 | - | 0.116 |
| Comp. Example 4 | Alumina(2) | Cerium | 10 | Dry blending | Ceria | 7.95 | 0.69 | 0.47 | -0.28 | 0.128 |
| Comp. Example 5 | Alumina(2) | Cerium | 10 | Dipping → firing | Ceria | 6.52 | 0.71 | 0.52 | 0.44 | 0.119 |
| Example 2 | Alumina(2) | Cerium | 10 | Spraying → firing | Ceria | 6.87 | 0.83 | 0.44 | 0.96 | 0.154 |
| Example 3 | Alumina(2) | Cerium | 20 | Spraying → firing | Ceria | 6.32 | 0.77 | 0.45 | 0.86 | 0.121 |

The following may be concluded from the results in Tables 1 and 2.

With the ceria-alumina composite particles of Comparative Examples 2, 4 and 5 and Examples 1 to 3, which had a lower cumulative pore volumes for the pore size range of 0.1 to 20 μm as a result of compositing alumina particles with ceria, the thermal conductivity was improved over the original alumina particles. In Comparative Examples 2, 4 and 5, however, which had low correlation coefficients between Al and the rare earth metal element, the degree of improvement in thermal conductivity was minimal.

In contrast, with the ceria-alumina composite particles of Examples 1 to 3, wherein the cumulative pore volume for the pore size range of 0.1 to 20 μm was lower than the original alumina particles as a result of compositing alumina particles and ceria, and which had a high correlation coefficient between Al and Ce, the thermal conductivity was significantly improved over the original alumina particles. Based on the results of XRD and the correlation coefficient between Al and Ce, it was surmised that the ceria primary particles in the ceria-alumina composite particles were supported on the secondary surfaces of the alumina particles.

<Evaluation method for exhaust gas purification performance of exhaust gas purification catalyst device>

The exhaust gas purification catalyst device was set in an atmospheric pressure fixed bed flow reactor and a stoichiometric model exhaust gas (composition shown below) was distributed while raising the gas temperature from 100°C to 600°C at a temperature-elevating rate of 20°C/min, and continuously monitoring the HC concentration, CO concentration and NOx concentration in the exhaust gas from the exhaust gas purification catalyst device. The gas temperatures at which the respective purification rates for HC, CO and NOx reached 50% (50% purification temperatures) were examined.

The model exhaust gas composition was the following. The concentrations are all mass ratios under standard conditions.

HC: 1,500 ppm
CO: 2,600 ppm
NO: 1,650 ppm
$O_2$: 0.27%
$CO_2$: 7.0%
$H_2O$: 1.5%
$N_2$: balance

<Example 4>

After dispersing 450 g of the ceria-alumina composite particles (particles for an exhaust gas purification catalyst) obtained in Example 2 in 1,000 mL of ion-exchanged water, there was added 26.7 g of a palladium nitrate solution with a Pd content of 8.44 mass% as Pd metal (2.25 g Pd content as Pd metal), and the mixture was stirred for 1 hour at room temperature. A suction filter was used to recover the solid portion from the stirred mixture, and after drying for 2 hours in air at 110°C, it was fired for 2 hours in air at 500°C to obtain an exhaust gas purification catalyst.

When the filtrate from suction filtration was analyzed by ICP luminescence analysis, no Pd was detected in the filtrate, thus indicating that the Pd loading efficiency in the obtained exhaust gas purification catalyst was 100%, the Pd loading ratio being 0.5 mass% where 100 mass% was the mass of the ceria-alumina composite particles.

A 300 g portion of the obtained exhaust gas purification catalyst was mixed with 450 mL of ion-exchanged water, and the mixture was wet ground with a ball mill to obtain a slurry of the exhaust gas purification catalyst adjusted to a mean particle size of 5 μm.

The substrate used was a cordierite monolith honeycomb support with a diameter of 30 mm and a length of 50 mm (0.035 L-volume), the slurry being coated onto the support to a dry coating amount of 3.5 g (100 g/L). After then drying for 2 hours in air at 250°C, it was fired for 2 hours in air at 500°C to obtain an exhaust gas purification catalyst device for Example 4.

The obtained exhaust gas purification catalyst device was used for evaluation of the catalyst performance by the method described above.

<Comparative Example 6>

An exhaust gas purification catalyst device was produced for Comparative Example 6 in the same manner as Example 4, except for using 456 g of the same type of alumina (2) used in Comparative Example 3, instead of ceria-alumina composite particles, and the exhaust gas purification performance was evaluated.

The exhaust gas purification performance values for the exhaust gas purification catalyst devices of Example 4 and Comparative Example 6 are shown in Table 3.

[Table 3]

Table 3

| | Precious metal catalyst | | Carrier particles | | | | Purification temperature for 50% exhaust gas purification performance (°C) | | |
|---|---|---|---|---|---|---|---|---|---|
| | | | | Inorganic covering layer | | Thermal conductivity (W/(m.K)) | | | |
| | Type | Loading weight (mass%) | Type | Type | Amount added in terms of oxide wt% | | HC | CO | NOx |
| Example 4 | Pd | 0.5 | Ceria-alumina composite particles | Ceria | 10 | 0.154 | 294 | 277 | 292 |
| Comp. Example 6 | Pd | 0.5 | Alumina particles | None | - | 0.116 | 300 | 350 | 306 |

As shown in Table 3, the exhaust gas purification catalyst device of Example 4 which used particles for an exhaust gas purification catalyst of the invention as the precious metal catalyst support was verified to have a lower 50% purification temperature for HC, CO and NOx, compared to the exhaust gas purification catalyst device of Comparative Example 6 which used alumina particles for the support. This suggests that because of the high thermal conductivity of the ceria-alumina composite particles composing the exhaust gas purification catalyst device, exhaust gas heat was rapidly transferred to the catalyst coating layer causing rapidly increasing temperature of the catalyst coating layer, and thus resulting in higher exhaust gas purification performance being exhibited at an earlier point.

<Example 5>

A mixed aqueous solution for spraying was prepared by mixing 274.4 g of a cerium nitrate solution with a Ce concentration of 16.4 mass% as $CeO_2$ (45 g of Ce as $CeO_2$) with 18.0 g of a praseodymium nitrate solution with a Pr concentration of 27.9 mass% as $Pr_6O_{11}$ (5 g of Pr as $Pr_6O_{11}$).
Ceria-alumina composite particles (particles for an exhaust gas purification catalyst) for Example 5 were obtained by spraying the aforementioned mixed aqueous solution for spraying onto 450 g of the same type of alumina (2) as used in Comparative Example 3, and drying for 8 hours in air at 250°C, and then firing for 2 hours in air at 500°C. The thermal conductivity of the ceria/praseodymium-alumina composite particles was evaluated.

<Examples 6 to 8>

Ceria-alumina composite particles (particles for an exhaust gas purification catalyst) were prepared in the same manner as Example 5, except that the mixing amounts of the cerium nitrate solution and praseodymium nitrate solution were changed during preparation of the mixed aqueous solution for spraying, the total of the amount of Ce as $CeO_2$ and the amount of Pr as $Pr_6O_{11}$ was 50 g and the ratios of both were adjusted to the values listed in Table 4, and the thermal conductivity of each was evaluated.
Table 4 shows the evaluation results for Examples 5 to 8 together with the results for Comparative Example 3 and Example 2.

[Table 4]

Table 4

| | Starting alumina material | Inorganic covering layer | | | | | | | Particle properties | | | |
|---|---|---|---|---|---|---|---|---|---|---|---|---|
| | | First element | | Second element | | Addition method | State | Crystallite diameter (nm) | Bulk density (g/mL) | Cumulative pore volume for 0.1 to 20 $\mu$m (mL/g) | Correlation coefficient ($\rho$Al, Ce) | Thermal conductivity (W/(m.K)) |
| | | Type | Amount added in terms of oxide wt% | Type | Amount added in terms of oxide wt% | | | | | | | |
| Comp. Example 3 | Alumina (2) | - | - | - | - | - | - | - | 0.67 | 0.48 | - | 0.116 |
| Example 2 | Alumina (2) | Ce | 10 | - | - | Spraying → firing | Ceria | 6.87 | 0.83 | 0.44 | 0.96 | 0.154 |
| Example 5 | Alumina (2) | Ce | 9 | Pr | 1 | Spraying → firing | Ce-Pr complex oxide | 5.35 | 0.83 | 0.48 | 0.90 | 0.156 |
| Example 6 | Alumina (2) | Ce | 8 | Pr | 2 | Spraying → firing | Ce-Pr complex oxide | 6.13 | 0.80 | 0.49 | 0.90 | 0.155 |
| Example 7 | Alumina (2) | Ce | 7 | Pr | 3 | Spraying → firing | Ce-Pr complex oxide | 4.60 | 0.80 | 0.45 | 0.93 | 0.151 |
| Example 8 | Alumina (2) | Ce | 5 | Pr | 5 | Spraying → firing | Ce-Pr complex oxide | 7.68 | 0.80 | 0.47 | 0.91 | 0.150 |

As shown in Table 4, the composite particles of Examples 5 to 8, which had alumina particles with a cerium-praseodymium complex oxide, were also verified to have significantly improved thermal conductivity compared to the original alumina particles (Comparative Example 3), similar to the composite particles of Example 2 which had alumina particles with ceria.

**Claims**

1. Particles for an exhaust gas purification catalyst, which include inorganic oxide particles and an inorganic covering layer covering the inorganic oxide particles, wherein the particles for an exhaust gas purification catalyst:

   have a lower cumulative pore volume for the pore size range of 0.1 to 20 $\mu$m, compared to the cumulative pore volume for the pore size range of 0.1 to 20 $\mu$m of the inorganic oxide particles before covering with the inorganic covering layer,
   whereby their thermal conductivity is higher than the inorganic oxide particles before covering with the inorganic covering layer.

2. Particles for an exhaust gas purification catalyst according to claim 1, wherein the thermal conductivity of the particles for an exhaust gas purification catalyst is at least 1.10 times the thermal conductivity of the inorganic oxide particles.

3. Particles for an exhaust gas purification catalyst according to claim 1 or 2, wherein the inorganic covering layer is a metal oxide layer.

4. Particles for an exhaust gas purification catalyst according to claim 3, wherein the correlation coefficient between the inorganic element in the inorganic oxide particles and the metal element in the metal oxide in the inorganic covering layer is 0.70 or greater for the particles for an exhaust gas purification catalyst, as measured by FE-EPMA.

5. Particles for an exhaust gas purification catalyst according to claim 3 or 4, wherein the metal element in the metal oxide includes cerium.

6. Particles for an exhaust gas purification catalyst according to claim 5, wherein the metal element in the metal oxide further includes praseodymium.

7. Particles for an exhaust gas purification catalyst according to any one of claims 3 to 6, wherein the crystallite diameter of the metal oxide composing the inorganic covering layer is 5 nm to 30 nm.

8. Particles for an exhaust gas purification catalyst according to any one of claims 1 to 7, wherein the bulk density of the particles for an exhaust gas purification catalyst is 0.59 g/cm$^3$ or greater.

9. Particles for an exhaust gas purification catalyst according to any one of claims 1 to 8, wherein:

   the inorganic oxide particles are alumina particles, and
   the inorganic covering layer is a layer including ceria at greater than 50 mass% with respect to the mass of the inorganic covering layer.

10. An exhaust gas purification catalyst that includes:

    particles for an exhaust gas purification catalyst according to any one of claims 1 to 9, and
    a precious metal catalyst,

    wherein the precious metal catalyst is supported on the particles for an exhaust gas purification catalyst.

11. An exhaust gas purification catalyst that includes:

    particles for an exhaust gas purification catalyst according to any one of claims 1 to 9,
    supporting particles composed of inorganic oxide particles but different from the particles for an exhaust gas purification catalyst, and
    a precious metal catalyst,

wherein the precious metal catalyst is supported on either or both the particles for an exhaust gas purification catalyst and the supporting particles.

12. An exhaust gas purification catalyst device having a substrate and a coating layer on the substrate, wherein the coating layer includes particles for an exhaust gas purification catalyst according to any one of claims 1 to 8.

13. An exhaust gas purification catalyst device having a substrate and a coating layer on the substrate, wherein the coating layer includes an exhaust gas purification catalyst according to claim 10 or 11.

## INTERNATIONAL SEARCH REPORT

International application No.

**PCT/JP2021/048696**

**A. CLASSIFICATION OF SUBJECT MATTER**

*B01J 37/02*(2006.01)i; *B01D 53/94*(2006.01)i; *B01J 23/63*(2006.01)i; *F01N 3/10*(2006.01)i
FI: B01J37/02 301Z; B01D53/94 222; B01D53/94 245; B01D53/94 280; F01N3/10 A; B01J23/63 A ZAB

According to International Patent Classification (IPC) or to both national classification and IPC

**B. FIELDS SEARCHED**

Minimum documentation searched (classification system followed by classification symbols)

B01J21/00-38/74; B01D53/86-53/90,53/94-53/96; F01N3/10,3/28;C01F7/02-7/021

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus / JST7580 / JSTChina (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 62-83315 A (NIPPON ENGELHARD LTD.) 16 April 1987 (1987-04-16)<br>claims 1, 2, upper left column, lines 8-13, example 2 | 1-13 |
| A | JP 2005-52779 A (CHIYODA CHEMICAL ENGINEERING & CONSTRUCTION CO., LTD.) 03 March 2005 (2005-03-03)<br>claims, paragraphs [0016]-[0018], examples 5, 6 | 1-13 |
| A | JP 2007-268470 A (MAZDA MOTOR CORP.) 18 October 2007 (2007-10-18)<br>claims, example 1, fig. 1, 2 | 1-13 |
| A | CN 102580731 A (WUXI WEIFU ENVIRONMENTAL CATALYSTS CO., LTD.) 18 July 2012 (2012-07-18)<br>claim 1, example 1 | 1-13 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
**Information on patent family members**

International application No.

**PCT/JP2021/048696**

| Patent document cited in search report | | | Publication date (day/month/year) | Patent family member(s) | Publication date (day/month/year) |
|---|---|---|---|---|---|
| JP | 62-83315 | A | 16 April 1987 | (Family: none) | |
| JP | 2005-52779 | A | 03 March 2005 | (Family: none) | |
| JP | 2007-268470 | A | 18 October 2007 | (Family: none) | |
| CN | 102580731 | A | 18 July 2012 | (Family: none) | |

Form PCT/ISA/210 (patent family annex) (January 2015)

**REFERENCES CITED IN THE DESCRIPTION**

**Patent documents cited in the description**

- JP 2001162166 A
- JP 2019048268 A